**Europäisches Patentamt**

**European Patent Office**

**Office européen des brevets**

(19)

(11) Numéro de publication : **0 405 297 B1**

(12)

# FASCICULE DE BREVET EUROPEEN

(45) Date de publication du fascicule du brevet :
04.08.93 Bulletin 93/31

(51) Int. Cl.⁵ : **G01M 1/32**

(21) Numéro de dépôt : **90111525.3**

(22) Date de dépôt : **19.06.90**

(54) **Procédé pour corriger les variations de force radiale entre le pneumatique et le sol.**

(30) Priorité : **30.06.89 FR 8909070**

(43) Date de publication de la demande :
**02.01.91 Bulletin 91/01**

(45) Mention de la délivrance du brevet :
**04.08.93 Bulletin 93/31**

(84) Etats contractants désignés :
**AT BE CH DE DK ES FR GB GR IT LI LU NL SE**

(56) Documents cités :
**DE-A- 3 529 509**
**US-A- 3 490 277**
**US-A- 3 725 163**

(73) Titulaire : **COMPAGNIE GENERALE DES ETABLISSEMENTS MICHELIN - MICHELIN & CIE**
**12, Cours Sablon**
**F-63040 Clermont-Ferrand Cédex (FR)**

(72) Inventeur : **Rousseau, Jean-Baptiste**
**3, chemin des Gravilles, St-Bonnet-près-Riom**
**F-63200 Riom (FR)**

(74) Mandataire : **Hiebel, Robert et al**
**MICHELIN & CIE - Service K. Brevets**
**F-63040 Clermont-Ferrand Cedex (FR)**

EP 0 405 297 B1

Jouve, 18, rue Saint-Denis, 75001 PARIS

## Description

La présente invention concerne un procédé pour corriger les défauts d'uniformité d'un pneumatique, et se rapporte plus particulièrement à un procédé permettant de réduire les variations de force dans les pneumatiques, lesdites variations provoquant un certain nombre d'effets défavorables dans la conduite d'un véhicule tels que vibrations diverses, mauvaise stabilité en ligne droite du véhicule, confort, de faible niveau, sensations anormales dans la direction.

Ces défauts d'uniformité ont de nombreuses causes et il est très difficile de construire un pneumatique parfaitement uniforme en raison des nombreuses variables qui interviennent. Certaines de ces variables peuvent être énumérées : irrégularités dimensionnelles des produits semi-finis rentrant dans la constitution du pneumatique, irrégularités en poids des mêmes produits, irrégularités dans la composition et les propriétés physiques, irrégularités dues aux modes de confection du pneumatique telles que les variations d'épaisseur par chevauchement, irrégularités dues à la vulcanisation du pneumatique telles que les variations de température de vulcanisation ou les variations de positionnement dans le moule de vulcanisation.

L'uniformité d'un pneumatique est généralement mesurée par le degré de perfection en ce qui concerne les dimensions physiques, l'équilibrage en poids et les variations de forces dynamiques. De nombreux procédés ont été utilisés pour tenter de corriger ou compenser chacune des irrégularités observées. Il est connu par exemple d'incorporer au sommet et à l'intérieur du pneumatique des petites quantités de caoutchouc pour équilibrer le pneumatique. La compensation du déséquilibre de l'ensemble pneumatique plus roue peut aussi se réaliser par l'adjonction de petites masses sur la jante de roue. En outre, il est de pratique courante de rectifier les dimensions d'un pneumatique en meulant la bande de roulement de celui-ci afin de le rendre parfaitement rond et concentrique par rapport à son axe de rotation.

Les mesures des variations de forces dynamiques sont actuellement aisées et se réalisent sur des machines, dites "d'uniformité", permettant au pneumatique gonflé et chargé, monté sur un essieu tournant, de rouler sur un tambour dont l'axe est accouplé à un système plus ou moins compliqué de jauges de contrainte appropriées. Des moyens pour mesurer les forces exercées sur ces jauges sont prévues, et les signaux produits par ces forces sont transmis à un dispositif de lecture enregistreur.

De nombreux essais sur véhicules ont montré que les variations de forces radiales, c'est-à-dire des forces agissant perpendiculairement à la surface de contact entre le pneumatique et le sol, étaient de loin les plus néfastes en ce qui concerne les effets défavorables sur la conduite et la tenue du véhicule. Comme connu, la courbe enregistrée de la variation de force radiale ($F_R$) sur un tour de roue est comparable à la courbe représentative d'un mouvement vibratoire, celui-ci pouvant être décomposé en une somme de mouvements sinusoïdaux harmoniques au moyen d'analyseurs harmoniques. Le brevet US 3 490 277 décrit un analyseur perfectionné, associé à une machine d'uniformité. Habituellement on attribue aux variations de la première harmonique ($F_{RH1}$) et de la deuxième harmonique ($F_{RH2}$) la responsabilité des irrégularités engendrées dans le comportement du véhicule, car généralement les plus importantes en amplitude, et possédant les fréquences les plus gênantes. Cependant les harmoniques d'ordre supérieur peuvent s'avérer gênantes par leurs fréquences pour certains véhicules, d'où un contrôle rigoureux exercé sur les pneumatiques et ensembles roulants, non seulement de la variation de force radiale globale mais aussi des harmoniques qui en résultent. De manière générale, les harmoniques d'ordre supérieur à 16 sont insignifiantes et non prises en compte.

Le brevet US 3 724 137 décrit un mode d'atténuation des variations de forces radiales. En combinaison avec la machine de mesure, deux meules rotatives sont placées dans des positions adjacentes aux épaulements de la bande de roulement du pneumatique, pour que ces meules enlèvent de la matière des nervures des épaulements de la bande de roulement en fonction des variations de forces radiales détectées sur le tambour et mesurées, jusqu'à ce que ces variations soient ramenées au niveau acceptable désiré. De nombreux brevets ont la particularité d'utiliser un tel meulage de la bande de roulement.

Modifier par meulage les épaisseurs de la bande de roulement n'apparaît pas être la meilleure solution à envisager pour corriger ces variations de forces dynamiques, la bande de roulement étant en effet un élément essentiel du pneumatique car elle assure le contact avec le sol et de ce contact dépendent de nombreuses qualités recherchées du pneumatique.

L'invention a pour objectif de fournir d'autres moyens pour réduire à un niveau acceptable la valeur des variations de forces radiales sur un pneumatique monté sur jante, sans toucher à la bande de roulement et sans altérer les autres critères d'uniformité et d'aspect.

Le procédé, conforme à l'invention, consiste dans son principe général, à mesurer sur une machine d'uniformité la variation de force radiale de l'ensemble roulant pneumatique jante de montage, à décomposer la variaton obtenue en variations harmoniques d'ordre 1 à 16, à contrôler les amplitudes de ces harmoniques, à recomposer une variation de force radiale, dénommée $F_{Rn}$ prenant en compte l'harmonique à corriger d'ordre n le plus élevé et toutes les harmoniques d'ordre inférieur, à déterminer l'amplitude crête à crête de la variation ainsi obtenue ainsi que les positions circonférentielles des optimums (maximum et minimum) de cette variation, et à modifier en fonction des valeurs obtenues le positionnement des tringles des bourrelets du pneumatique au moyen de cales, sous forme d'anneaux circulaires, placées entre la jante de montage et les bourrelets du pneumatique, ces cales présentant circonférentiellement une épaisseur variable et étant réalisées en un matériau plastique ou élastomèrique de densité au plus égale à 1,2.

Il est rappelé que la densité d'un matériau est le rapport de sa masse volumique sur la masse volumique de l'eau, et en conséquence que la densité est un nombre sans dimension.

Il existe différents types de jantes utilisables pour un pneumatique. En premier lieu, celui-ci peut être monté sur une jante dite à "seat plat", c'est-à-dire une jante dont les sièges, vus en section transversale, forment avec l'axe de rotation du pneumatique, des angles égaux à 5°± 1°, et dont les rebords comportent une paroi verticale de plus ou moins grande hauteur. En deuxième lieu, un pneumatique, en particulier un pneumatique pour camions ou autocars, peut être monté sur une jante dite "à seat 15°", c'est-à-dire une jante dont les sièges forment avec l'axe de rotation du pneumatique des angles égaux à 15°± 1°, et dont les rebords sont exclusivement formés de courbes. Ces deux types de jante sont fort connus et par ailleurs normalisés par les normes internationales telles que les normes américaines (TRA) ou européennes (ETRTO).

Suivant le type de jante sur laquelle est monté le pneumatique, la modification du positionnement des tringles des bourrelets est obtenue de manières différentes. Ainsi dans le cas où le pneumatique est monté sur une jante ayant des rebords comprenant une partie perpendiculaire à l'axe de rotation du pneumatique, le procédé consiste à diminuer la distance axiale séparant les tringles des bourrelets du pneumatique au moyen de cales de compensation placées entre les parois verticales des rebords de jante et les parois correspondantes des bourrelets du pneumatique. Chaque cale a une épaisseur maximale au niveau de la valeur maximale de la force radiale $F_{Rn}$ recomposée et une épaisseur minimale de 0,3 mm au niveau de la valeur minimale de la force radiale $F_{Rn}$. En ces deux valeurs, l'épaisseur (e), pour chaque point de la courbe représentant la variation de force radiale $F_{Rn}$, est telle que la quantité (e-0,3) exprimée en mm soit proportionnelle à la différence entre la valeur de la force radiale mesurée pour le point donné et la valeur de la force radiale minimale.

Dans le cas où le pneumatique est monté sur une jante n'ayant pas de rebords comprenant des parois verticales, et en particulier sur une jante dite à seat 15°, le procédé consiste à disposer les cales de compensation entre les sièges de jante et les sièges de bourrelets. Ces cales se présentent sous la forme d'anneaux circulaires à épaisseur variable circonférentiellement, mais, à la différence du procédé précédent, la valeur maximale de l'épaisseur de la cale correspond à la valeur minimale de la force radiale ($F_{Rn}$) et inversement la valeur minimale de l'épaisseur correspond à la valeur maximale de cette force.

L'emploi de ces cales de compensation permet par l'intermédiaire du positionnement des tringles de bourrelets d'influencer la trajectoire des câbles de l'armature de carcasse du pneumatique et en conséquence de réaliser une compensation globale de la variation de force radiale ($F_{Rn}$) quelle que soit l'origine de cette variation, que ce soit une variation due à la forme de l'ensemble roulant ou que ce soit une variation due à la rigidité de cet ensemble.

La description qui va suivre en regard du dessin annexé, donné à titre d'exemple, fera mieux comprendre comment l'invention peut être réalisée. Sur ce dessin :

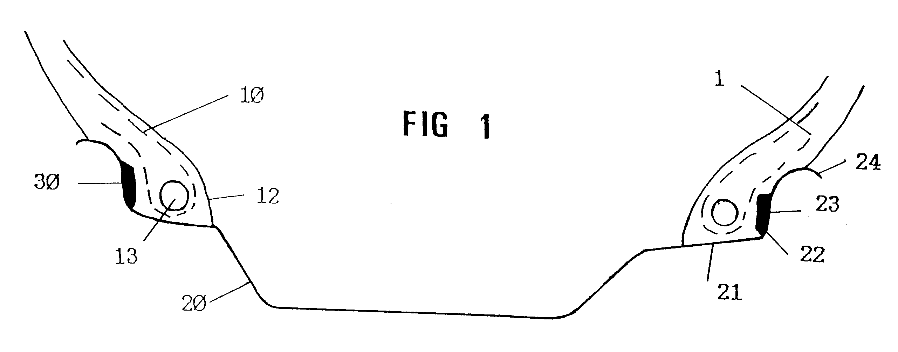

- la figure 1 montre partiellement la section transversale d'un pneumatique à armature de carcasse radiale pourvu de deux bourrelets montés sur une jante à seat plat, l'ensemble roulant étant muni de cales de compensation,
- la figure 2 est une vue détaillée d'une cale de compensation de la figure 1,
- la figure 3 est une vue détaillée d'une cale de compensation dont la section transversale est un parallélogramme,

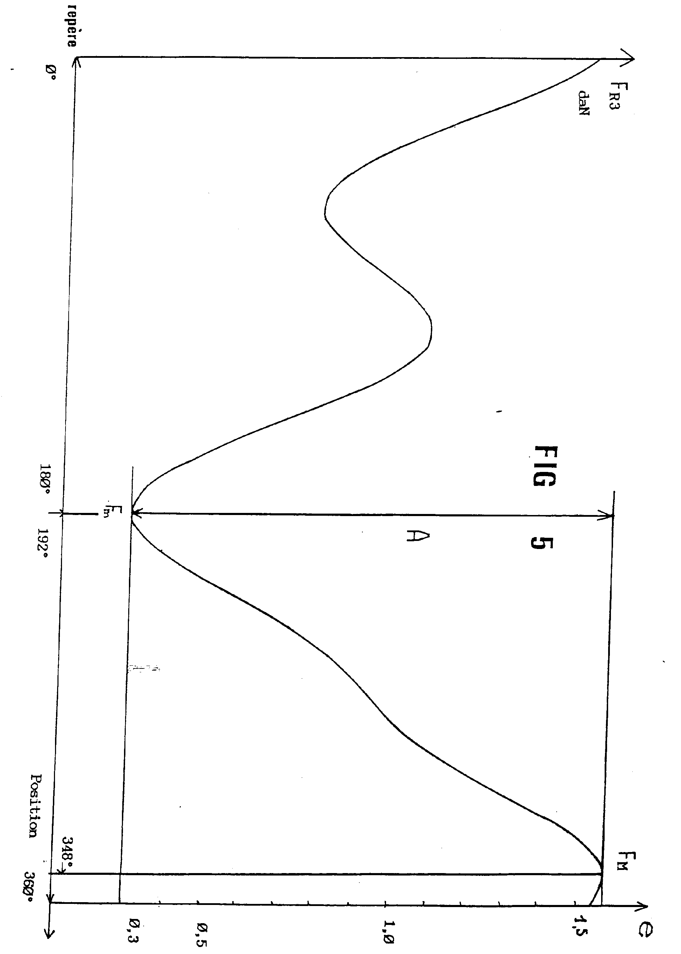

- la figure 4 montre, sur un tour de roue, les variations respectives des harmoniques d'ordre 1, 2 et 3 obtenues par décomposition du signal global mesuré.
- la figure 5 montre la variation ($F_{Rn}$) recomposée à partir des harmoniques d'ordre 1 à 3.
- la figure 6 est une vue en section transversale d'un pneumatique et ses bourrelets, montés sur une jante à seat 15°, avec des cales de compensation disposées entre sièges.

Le pneumatique (1) à armature de carcasse radiale (10) est un pneumatique de dimension 205/55 R 15 MXV, monté sur une jante (20) à "seat plat". Il comprend deux bourelets (12) munis chacun d'une tringle (13) autour de laquelle vient s'enrouler l'armature de carcasse (10). La jante (20) présente, vue en section transversale, un contour comprenant essentiellement un siège de jante (21), formant avec l'axe de rotation du pneumatique, perpendiculaire au plan équatorial (XX') un angle de 5°± 1°, un arrondi (22), une portion verticale (23) formant avec un deuxième arrondi (24) le rebord de jante. Les dimensions et caractéristiques d'un tel contour sont normalisées. Entre les rebords de jante (23) et les parois correspondantes des bourrelets (12) du pneumatique sont positionnées des cales de compensation (30), de chaque côté de pneumatique (1).

En se référant à la figure (2), la portion arrondie radialement extérieure (24) du rebord de jante est tangente

3

au point T à la paroi verticale (23), ce point de tangence T étant situé radialement à une distance $R_T$ de l'axe de rotation du pneumatique (1). De même la paroi verticale (23) est tangente à la portion arrondie radialement intérieure (22) du rebord de jante, en un point S, situé à la distance radiale $R_S$ de l'axe de rotation, la différence $R_T - R_S$ égale à (H) représentant alors la hauteur de la paroi verticale (23) du rebord de jante.

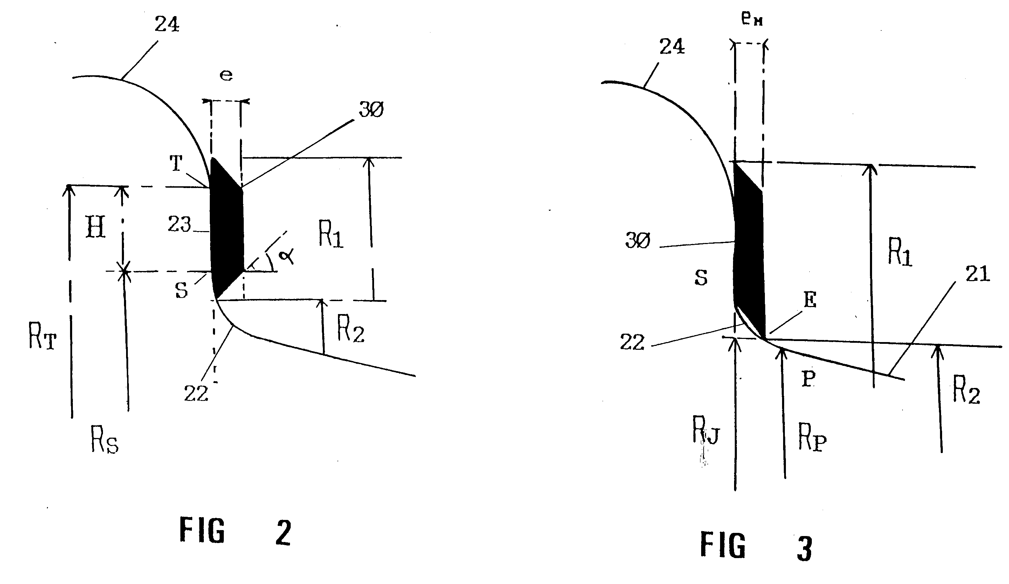

Un cale (30) telle que montrée sur la figure (2) est un anneau circulaire, de développement circonférentiel extérieur égal à $2\pi R_1$, $R_1$ étant au moins égal à $R_T$ et de développement circonférentiel intérieur $2\Pi R_2$, $R_2$ étant au plus égal à $R_S$. L'épaisseur (e) est constante sur au moins une hauteur égale à la hauteur (H) de la paroi verticale (23) du rebord de la jante (20), la cale montrée sur la figure 2 a une section transversale de forme trapézoidale, les deux bases du trapèze étant réunies par deux côtés faisant avec lesdites bases un angle $\alpha$, compris entre 40 et 50°.

Les cales de compensation (30) peuvent aussi avoir une section transversale en forme de parallélogramme comme montré sur la figure (3), le développement circonférentiel intérieur $2\Pi R_2$ étant alors légèrement inférieur à la quantité $2\Pi R_J$, $R_J$ étant le rayon nominal de la jante et normalisé. Cette forme permet d'obtenir le contact le meilleur possible entre le bourrelet du pneumatique, la cale (30) et le rebord de jante.

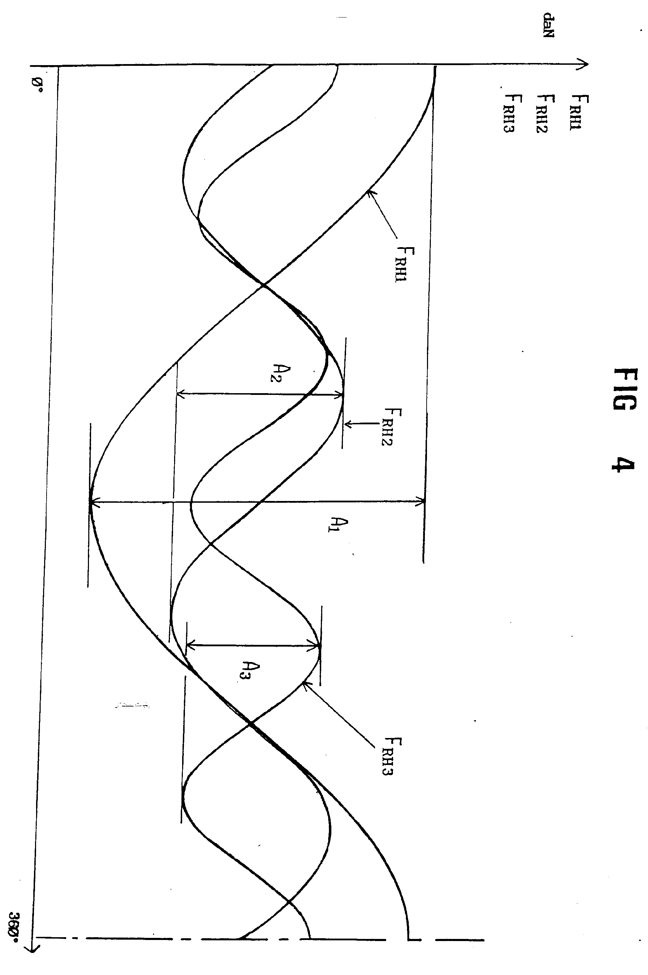

Il faut entendre par développement circonférentiel légèrement inférieur à $2\Pi R_J$, un développement inférieur à $2\Pi R_j$, mais supérieur à la valeur $2\Pi R_p$, $R_p$ étant le rayon du point de tangence (P) entre le siège de jante (21) et la portion arrondie (22) (fig. 3).

L'épaisseur (e) de la cale de compensation (30), variable circonférentiellement, est déterminée de la manière qui suit : Après avoir obtenu le signal, représentant la variation de force radiale globale $(F_R)$, mesurée et enregistrée, celui-ci est décomposé en ses principales harmoniques $F_{RH1}$ $F_{RH2}$,...$F_{RH16}$ d'ordre 1 à 16. Les amplitudes de ces mouvements sinusoïdaux sont comparées à des limites de contrôle préétablies. La figure (4) montre le cas du pneumatique étudié, monté sur sa jante de service, où les amplitudes des harmoniques d'ordre supérieur à 3 se sont révélées acceptables, et où l'harmonique d'ordre 3 présente par contre une amplitude $(A_3)$ trop élevée en fonction des limites de contrôle imposées. Il en est par ailleurs de même des amplitudes $(A_2)$ et $(A_1)$ des harmoniques d'ordres 2 et 1. A partir de ces harmoniques d'ordre 1 à 3, est alors recomposé le mouvement vibratoire représentant la variation de force radiale $(F_{R3})$ sur un tour de roue. Ce mouvement vibratoire a une amplitude (A) mesurée entre la valeur maximale $(F_M)$ et la valeur minimale (Fm) (figure 5), pour des positions circonférentielles, mesurées en degrés par rapport à un repère matérialisé sur le pneumatique, respectives à 192° et 348°. A la valeur $(F_M)$ maximale correspond l'épaisseur $(e_M)$ maximale de la cale de compensation (30). A la valeur minimale $(F_m)$ correspond l'épaisseur (em) minimale de la même cale (30). Les contraintes imposées par la fabrication des cales de compensation, quelque soit le matériau utilisé, sont telles que la valeur $(e_m)$ minimale ne peut être inférieure à 0,3 mm. Ainsi, pour toute cale de compensation (30), l'épaisseur minimale est de 0,3 mm.

Quant à la valeur maximale $(e_M)$, elle est fonction de l'amplitude (A) mesurée de la variation $(F_Rn)$ de force radiale. Aussi pour la dimension étudiée, des expériences préliminaires réalisées sur une population de pneumatiques ont montré que sur la population d'amplitudes (A) variant de 4 daN à 15 daN, l'épaisseur $(e_M)$ correctrice varie de 0,8 mm à 2,6 mm, de manière sensiblement proportionnelle à l'amplitude (A). Compte tenu des tolérances de fabrication de ces cales (30), le tableau suivant permet de déterminer l'épaisseur $(e_M)$ nécessaire en fonction de l'amplitude.

| A mesurée<br><br>daN | 4<br>à<br>5 | 5<br>à<br>6 | 6<br>à<br>7 | 7<br>à<br>8 | 8<br>à<br>9 | 9<br>à<br>10 | 10<br>à<br>11 | 11<br>à<br>12 | 12<br>à<br>13 | 13<br>à<br>14 |
|---|---|---|---|---|---|---|---|---|---|---|
| Epaisseur(e)<br>correctrice<br>mm | O,8 | 1,0 | 1,2 | 1,4 | 1,6 | 1,8 | 2,0 | 2,2 | 2,4 | 2,5 |

Ainsi dans l'exemple étudié, l'amplitude (A) obtenue étant de de 8,5 daN, la cale de compensation (30) adaptée a une épaisseur $(e_M)$ maximale de 1,6 mm et une épaisseur $(e_m)$ minimale de 0,3 mm. Entre ces deux valeurs, l'épaisseur (e) est soumise aux mêmes variations que la valeur (FR3) mesurée, en fonction de la position circonférentielle. En portant sur l'axe des ordonnées une échelle linéaire des valeurs d'épaisseur, entre 0,3 mm et, dans le cas étudié, 1,6 mm, la même courbe donne alors l'épaisseur (e) pour chaque position circonférentielle (figure 5 à droite).

Le même procédé s'applique lorsque seule la variation de la première harmonique $(F_{R1})$ est à corriger, la cale de compensation (30) utilisée présentant alors une épaisseur ($e_M$) maximale au niveau de la valeur ($F_M$) maximale et une épaisseur ($e_m$) de 0,3 mm au niveau de la valeur ($F_m$) minimale, se trouvant à 180° de la valeur ($F_M$). L'épaisseur (e) décroît alors de ($e_M$) à 0,3 mm et croît ensuite de 0,3 mm à ($e_M$), suivant une fonction trigométrique sinus.

A titre d'exemple, pour une enveloppe pneumatique 176/65 R 14 X présentant une amplitude ($A_1$) de 8,5 daN, la cale (30) adaptée à une épaisseur maximale ($e_M$) de 1,6 mm, décroissante de part et d'autre de la position circonférentielle correspondante au maximum de ($F_{R1}$) pour atteindre 0,3 mm à la position opposée. L'amplitude ($A_1$) est alors réduite à 3,0 daN sans que les amplitudes des autres variations harmoniques soient modifiées.

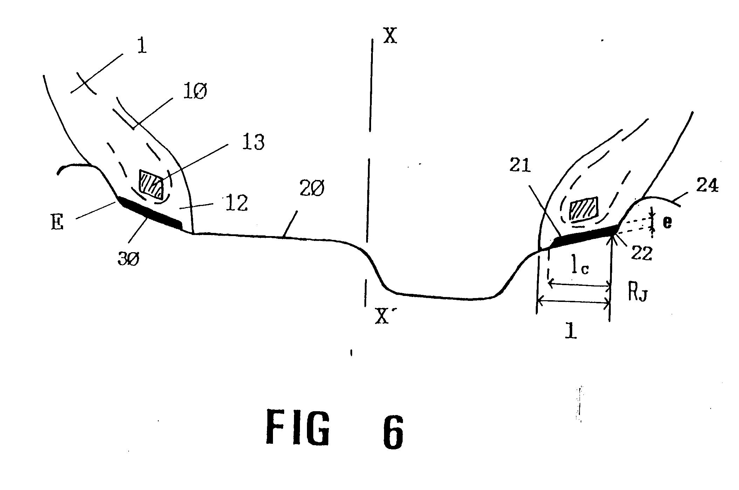

La figure 6 montre un pneumatique (1) de dimension 235/75 R 17.5 X, monté sur une jante (20) dont les sièges (21) font avec l'axe de rotation du pneumatique des angles de 15° ± 1°. Etant donné le contour du rebord de jante, formé des arcs circulaires (22) et (24), il n'est pas possible de positionner correctement des cales de compensation (30) entre les rebords de jante et les parois correspondantes du pneumatique (1). Aussi les cales (30) sont-elles placées entre les sièges (21) de la jante (20) et les sièges correspondants des bourrelets (12) du pneumatique (1), pourvus des tringles (13).

La cale (30) utilisée, et telle que montrée sur la figure 6, se présente sous la forme d'un anneau circulaire dont la section transversale a la forme du parallélogramme, de forme allongée dans le sens axial, et dont les deux côtés les plus longs sont parallèles au siège de jante (21), les deux côtés les plus courts faisant avec les précédents un angle compris entre 40° et 50°.

La largeur ($l_c$) d'une cale (30) définie comme étant la largeur d'un grand côté de la section transversale, est au moins égale à 80 % de la largeur (l) du bourrelet (12) du pneumatique (1). Quant à l'épaisseur (e) de la cale (30), mesurée perpendiculairement aux deux grands côtés de la section, elle est, comme dans le procédé précédent, variable circonférentiellement, les caractéristiques d'épaisseur (e) étant définies de la même manière, en fonction de la variation de force radiale étudiée.

Les pneumatiques, utilisant des jantes à "seat 15" étant principalement des pneumatiques pour véhicules "Poids Lourd", l'expérience montre qu'il est généralement inutile de prendre en compte les variations des harmoniques d'ordre supérieur à 1.

Pour un pneumatique 235/75 R 17.5 X, monté sur une jante à "seat 15°", où seule la variation de la première harmonique est prise en compte, la cale de compensation (30) présente une épaisseur maximale ($e_M$) de 2 mm, décroissante de part et d'autre de la position circonférentielle correspondant à la valeur minimale de la première harmonique pour atteindre 0,3 mm à la position circonférentielle opposée (à 180°), correspondante à la valeur maximale de la variation de l'harmonique d'ordre 1.

L'amplitude ($A_1$) de la variation de la première harmonique passe alors d'une valeur de 47 daN à une valeur nettement moindre de 15 daN.

Quel que soit le procédé de correction utilisé, ces cales (30) de compensation sont réalisées en matériau plastique, simple ou composite, ou en matériau élastomérique chargé (vulcanisat), matériau présentant une densité inférieure à 1,2 , ceci afin d'éviter un déséquilibre statique ou dynamique de l'ensemble roulant formé par le pneumatique (1) et la jante (20). Néanmoins si un tel déséquilibre était mis en évidence par une mesure appropriée, il peut être corrigé par les méthodes habituelles, telles que la mise sur la jante de petites masses additionnelles. Il est évident que le matériau doit avoir une rigidité à la compression susceptible de résister aux efforts de compression exercés par les bourrelets (12) des pneumatiques soit sur les rebords de jante, soit sur les sièges. Ces efforts de compression sont fonction de nombreux facteurs et sont extrêmement variables suivant le type de bourrrelets (sièges à 15° ou à 5°), le type de tringle utilisé, le serrage de la tringle sur la jante, les propriétés des mélanges vulcanisés utilisés autour de la tringle. Si l'on mesure la rigidité à la compression d'une cale (30) par la dureté Shore D à 20°C, cette dureté peut donc être très variable et adaptable à chaque dimension de pneumatique, entre des valeurs de 40 à 90 points.

Comme matériau possible, utilisable pour la fabrication de ces cales (30) de compensation, on citera les matières plastiques telles que le polychlorure de vinyle rigide, le polypropylène, les polyamides de type 6 ou 66, ou encore les matières plastiques à caractère élastomèrique telles que les polyuréthanes élastomères thermoplastiques, ou encore les vulcanisats, c'est-à-dire les matières élastomériques chargées et vulcanisables.

Suivant le matériau utilisé et suivant les variations d'épaisseur désirées, ces cales (30) sont obtenues soit, dans le cas de matière plastique, par moulage et usinage, soit dans le cas de vulcanisats par extrusion ou moulage.

Afin de parfaire le positionnement désiré de ces cales (30) avant et pendant le remontage du pneumatique (1) sur la jante (20), ces cales peuvent être maintenues collées aux bourrelets du pneumatique. S'il s'agit de cales en matériau plastique, quelques points d'adhésion suffisent, cette adhésion pouvant être obtenue de manière simple, par exemple, au moyen de colles ou de papier collant. De simples morceaux de "scotch" ou de papier collant "double face" sont bien adaptés. S'il s'agit de cales en matériau vulcanisable, les cales seront avantageusement collées sur les bourrelets par une opération de réparation usuelle, c'est-à-dire avec mise entre la cale et le bourrelet d'une gomme de liaison élastomérique et de couches de dissolution, l'ensemble cale, gomme de liaison et dissolution, bourrelet étant ensuite chauffé à une température donnée de manière à vulcaniser la gomme de liaison.

**Revendications**

1. Procédé pour corriger les défauts d'uniformité d'un pneumatique monté sur une jante dont les rebords présentent une partie perpendiculaire à l'axe de rotation, consistant à faire rouler le pneumatique monté, gonflé et chargé sur le tambour d'une machine d'uniformité à enregistrer graphiquement la variation de force radiale ($F_r$) de l'ensemble roulant pneumatique-jante, à démonter le pneumatique de sa jante, caractérisé en ce que
   - on décompose la variation de force radiale ($F_R$) en ses harmoniques d'ordre 1 à 16,
   - on contrôle les variations des harmoniques vis à vis des limites de contrôle à ne pas dépasser,
   - on recompose une variation de force radiale ($F_{Rn}$) prenant en compte l'harmonique d'ordre n le plus élevé qu'il faut corriger et toutes les harmoniques d'ordre inférieur,
   - on détermine l'amplitude de la variation ($F_{Rn}$) ainsi obtenue et les positions circonférentielles des optimums (maximum $F_M$ et minimum $F_m$) de cette variation ($F_{Rn}$),
   - et en ce qu'on place, entre les parois verticales (23) des rebords de jante (20) et les parois correspondantes des bourrelets (12) de chaque côté du pneumatique (1), une cale de compensation (30) sous forme d'anneau circulaire, dont le rayon extérieur ($R_1$) est au moins égal au rayon ($R_T$) du point de tangence (T) entre la portion arrondie (24) supérieur et la paroi verticale (23) du rebord de la jante (20), dont le rayon intérieur ($R_2$) est au plus égal au rayon ($R_s$) du point de tangence (S) entre la paroi verticale (23) et la portion arrondie (22) inférieure du rebord de jante, et dont l'épaisseur (e), constante radialement sur la hauteur (H) est variable circonférentiellement entre une valeur ($e_M$) maximale au niveau de la valeur maximale ($F_M$) de la variation de force radiale ($F_{Rn}$) et sensiblement proportionnelle à l'amplitude (A) de la variation ($F_{Rn}$), et une valeur minimale ($e_m$) de 0,3 mm au niveau de la valeur minimale ($F_m$) de la variation ($F_{Rn}$), la valeur de l'épaisseur (e), entre ces deux extrêmes ($e_M$) et ($e_m$), pour le point de la cale (30) correspondant à la valeur (F) de la force radiale mesurée, étant telle que la quantité (e-0,3) en mm soit proportionnelle à la quantité (F-$F_m$), la cale de compensation étant réalisée en un matériau simple ou composite, plastique ou élastomérique, de densité au plus égale à 1,2 .

2. Procédé selon la revendication 1, caractérisé en ce que la cale de compensation (30) a une épaisseur (e) qui décroît d'une valeur maximale ($e_M$) au niveau de la valeur maximale ($F_M$) de la première harmonique ($F_{R1}$) de la variation de force radiale ($F_R$) a une valeur minimale ($e_m$) de 0,3 mm au niveau de la valeur minimale ($F_m$), et croît de cette valeur minimale à la valeur maximale ($e_M$), la variation de (e) en fonction de la position circonférentielle était une fonction sinus.

3. Procédé selon l'une des revendications 1 à 2, caractérisé en ce qu'on utilise des cales (30), de hauteur (h) supérieure à la hauteur (H) de la paroi verticale (23) du rebord de la jante (20) et de section transversale quasi trapézoïdale, les bases de cette section étant parallèles à la paroi verticale (23), et les deux autres côtés de cette section faisant avec lesdites bases un angle ($\alpha$) compris entre 40° et 50°.

4. Procédé selon l'une des revendications 1 à 2, caractérisé en ce qu'on utilise des cales de compensation (30) de hauteur (h) supérieure à la hauteur (H) de la paroi verticale (23) du rebord de la jante (20) et de section transversale en forme de parallélogramme, le développement intérieur de la cale (30) étant légèrement inférieur à la quantité $2\Pi R_J$, $R_J$ étant le rayon nominal de la jante.

5. Procédé pour corriger les défauts d'uniformité d'un pneumatique monté sur une jante dont les sièges font avec l'axe de rotation du pneumatique un angle de 15° ± 1°, consistant à mesurer l'amplitude et les positions circonférentielles des optimums de la variation de force radiale de la première harmonique, par roulage sur une machine d'uniformité, caractérisé en ce que, après mesures et démontage du pneumatique, on place entre les sièges (21) de la jante (20) et les sièges de bourrelets (12) du pneumatique (1), de chaque côté du pneumatique (1), une cale de compensation (30) sous forme d'anneau circulaire et ayant une section transversale sous forme de parallélogramme, dont la largeur ($l_c$) est au moins égale à 80 % de la largeur (l) du bourrelet (12), dont l'épaisseur (e) mesurée perpendiculairement aux sièges (21) de la jante (20) est constante sur une section transversale mais variable circonférentiellement entre une valeur ($e_M$), maximale au niveau de la valeur minimale ($F_m$) de la force radiale ($F_{R1}$), et une valeur minimale ($e_m$) de 0,3 mm au niveau de la valeur maximale ($F_M$), la valeur ($e_M$) étant proportionnelle à l'amplitude ($A_1$) de la variation ($F_{R1}$), la valeur de l'épaisseur (e) en un point de la cale correspondant à la force radiale (F) étant telle que (e - 0,3) mm soit inversement proportionnelle à (F - $F_m$), la cale de compensation étant réalisée en un matériau simple ou composite, plastique ou élastomérique, de densité au plus égale à 1,2.

6. Procédé selon les revendications 1 à 4, caractérisé en ce que les cales de compensation (30) sont en matériau plastique, placées et maintenues, soit sur la jante (20), soit sur le bourrelet (12) du pneumatique (1), par simple adhésion au moyen de papier adhésif.

7. Procédé selon les revendications 1 à 4, caractérisé en ce que les cales de compensation (30) sont en matériau élastomérique chargé, appliquées sur les bourrelets (12) du pneumatique (1) au moyen d'une gomme de liaison et de couches de dissolution, l'ensemble bourrelet-cale subissant une vulcanisation partielle et localisée, par apport de chaleur.


**Patentansprüche**

1. Verfahren zur Korrektur der Ungleichmäßigkeiten eines auf einer Felge montierten Luftreifens, deren Ränder einen zur Drehachse senkrechten Teil aufweisen, durch Laufenlassen des montierten, aufgepumpten und belasteten Luftreifens auf der Trommel einer Maschine zur Messung der Gleichmäßigkeit, graphische Registrierung der Änderung der Radialkraft ($F_r$) der sich drehenden Einheit aus Luftreifen und Felge und Abmontieren des Luftreifens von der Felge,
   **gekennzeichnet durch**
   - Zerlegung der Variation der Radialkraft ($F_R$) in ihre Harmonischen 1. bis 16. Ordnung,
   - Kontrolle der Variationen der Harmonischen in Bezug auf die Kontrollgrenzen, die nicht überschritten werden dürfen,
   - Rekombination einer Variation der Radialkraft ($F_{Rn}$) unter Berücksichtigung der Harmonischen der höchsten Ordnung n, die korrigiert werden muß, sowie aller Harmonischen niedrigerer Ordnung,
   - Bestimmung der Amplitude der so erhaltenen Variation ($F_{Rn}$) und der Umfangspositionen der Optima (Maximum $F_M$ und Minimum $F_m$) dieser Variation ($F_{Rn}$) und
   - Einsetzen einer Kompensationseinlage (30) in Form eines Kreisrings zwischen die senkrechten Wände (23) der Ränder der Felge (20) und die entspreschenden Wände der Wülste (12) auf jeder Seite des Luftreifens (1), deren radial äußerer Radius ($R_1$) mindestens gleich dem Radius ($R_T$) des Tangentialpunktes zwischen dem oberen gerundeten Abschnitt (24) und der senkrechten Wand (23) des Randes der Felge (20) ist, deren radial innerer Radius ($R_2$) höchstens gleich dem Radius ($R_S$) des Tangentialpunkts (S) zwischen der senkrechten Wand (23) und dem unteren Rand der Felge ist und dessen Dicke (e), die über die Höhe (H) in Radialrichtung konstant ist, in Umfangsrichtung zwischen einem Maximalwert ($e_M$) am Ort des Maximalwerts ($F_M$) der Variation der Radialkraft ($F_{Rn}$), der im wesentlichen der Amplitude (A) der Variation ($F_{Rn}$) proportional ist, und einem Minimalwert ($e_m$) von 0,3 mm am Ort des Minimalwerts ($F_m$) der Variation ($F_{Rn}$) variiert, wobei der Wert der Dicke (e) zwischen diesen beiden Extremwerten ($e_M$ und $e_m$) für den Punkt der Kompensationseinlage (30), der dem Wert F der gemessenen Radialkraft entspricht, so ist, daß der Wert e-0,3 in mm proportional dem Wert F-$F_m$ ist und die Kompensationseinlage aus einem einfachen oder zusammengesetzten Kunststoff- oder Elastomermaterial einer Dichte von höchstens gleich 1,2 besteht.

2. Verfahren nach Anspruch 1, dadurch gekennzeichnet, daß die Kompensationseinlage (30) eine Dicke (e) aufweist, die von einem Maximalwert ($e_M$) am Ort des Maximalwertes ($F_M$) der ersten Harmonischen ($F_{R1}$) der Variation der Radialkraft ($F_R$) auf einen Minimalwert ($e_m$) von 0,3 mm am Ort des Minimalwerts ($F_m$) abnimmt und von diesem Minimalwert zum Maximalwert ($e_M$) anwächst, wobei die Variation von (e) in Abhängigkeit vom Umfangsort eine Sinusfunktion ist.

3. Verfahren nach Anspruch 1 oder 2, dadurch gekennzeichnet, daß Kompensationseinlagen (30) einer Höhe (h) verwendet werden, die größer ist als die Höhe (H) der senkrechten Wand des Randes der Felge (20) und die einen quasitrapezoidalen Querschnitt besitzen, wobei die Grundlinien dieses Querschnitts parallel zur senkrechten Wand (23) liegen und die beiden anderen Seiten dieses Querschnitts mit diesen Grundlinien einen Winkel ($\alpha$) zwischen 40 und 50° bilden.

4. Verfahren nach Anspruch 1 oder 2, dadurch gekennzeichnet, daß Kompensationseinlagen (30) einer Höhe (h) verwendet werden, die größer ist als die Höhe (H) der senkrechten Wand (23) des Randes der Felge (20), und die einen Querschnitt in Form eines Parallelogramms besitzen, wobei der radial innen liegende Umfang der Kompensationseinlage (30) etwas kleiner ist als $2\pi R_J$, wobei $R_J$ der Nennradius der Felge ist.

5. Verfahren zur Korrektur der Ungleichmäßigkeiten eines auf eine Felge montierten Luftreifens, deren Sitze mit der Drehachse des Luftreifens einen Winkel von $15° \pm 1°$ bilden, durch Messung der Amplitude und der Umfangspositionen der Optima der Variation der Radialkraft der ersten Harmonischen unter Laufenlassen auf einer Maschine zur Messung der Gleichmäßigkeit,
gekennzeichnet durch
Einsetzen einer Kompensationseinlage (30) in Form eines Kreisrings zwischen die Sitze (21) der Felge (20) und die Sitze der Wülste (12) des Luftreifens (1) auf jeder Seite des Luftreifens (1) mit einem Querschnitt in Form eines Parallelogramms, deren Breite (1c) mindestens gleich 80 % der Breite (1) des Wulstes (12) ist, deren senkrecht zu den Sitzen (21) der Felge (20) gemessene Dicke (1) über einen Querschnitt konstant ist, aber in Umfangsrichtung zwischen einem Maximalwert ($e_M$) auf Höhe des Minimalwerts ($F_m$) der Radialkraft ($F_{R1}$) und einem Minimalwert ($e_m$) von 0,3 mm auf Höhe des Maximalwerts ($F_M$) variiert, wobei der Wert $e_M$ der Amplitude ($A_1$) der Variation ($F_{R1}$) proportional ist und der Wert der Dicke (e) an einem der Radialkraft (F) entsprechenden Punkt der Kompensationseinlage so ist, daß der Wert e-0,3 in mm entgegengesetz proportional dem Wert $F-F_m$ ist, und die aus einem einfachen oder zusammengesetzten Kunststoff- oder Elastomermaterial einer Dichte von höchstens gleich 1,2 besteht.

6. Verfahren nach den Ansprüchen 1 bis 4, dadurch gekennzeichnet, daß die Kompensationseinlagen (30) aus einem Kunststoffmaterial bestehen und entweder auf der Felge (20) oder auf dem Wulst (12) des Luftreifens (1) angebracht und durch einfache Adhäsion mittels eines Adhäsionsklebebandes gehalten werden.

7. Verfahren nach den Ansprüchen 1 bis 4, dadurch gekennzeichnet, daß die Kompensationseinlagen (30) aus einem mit Füllstoff gefüllten Elastomermaterial bestehen und mittels eines Verbindungsgummis und von Auflösungsschichten an den Wülsten (12) des Luftreifens (1) angebracht sind, wobei die Einheit aus Wulst und Kompensationseinlage partiell und örtlich durch Zufuhr von Wärme vulkanisiert wird.

## Claims

1. A method of correcting defects in uniformity of a tyre mounted on a rim, the rim flanges of which have a portion perpendicular to the axis of rotation, which includes rolling the tyre mounted, inflated and under load on the drum of a uniformity machine, graphically recording the variation in radial force ($F_r$) of the rolling assembly consisting of tyre and rim, and removing the tyre from its rim, characterised in that:
   - the variation in radial force ($F_R$) is broken down into its harmonics of the 1st to 16th order;
   - the variations in the harmonics are checked with respect to control limits which are not to be exceeded;
   - a variation in radial force ($F_{Rn}$) which takes into account the harmonic of the highest order $\underline{n}$ which it is necessary to correct and all harmonics of lower order is recomposed;
   - the amplitude of the variation ($F_{Rn}$) thus obtained is determined as well as the circumferential positions of the optimums (maximum $F_M$ and minimum $F_m$) of this variation ($F_{Rn}$);
   - and in that a compensation wedge (30) in the form of a circular ring is placed between the vertical wells (23) of the rim flanges (20) and the corresponding walls of the beads (12) on each side of the tyre (1), the outside radius ($R_1$) of which wedge is at least equal to the radius ($R_T$) of the point of tangency (T) between the upper rounded portion (24) and the vertical wall (23) of the flange of the rim (20), the inner radius ($R_2$) of which is at most equal to the radius ($R_S$) of the point of tangency (S) between the vertical wall (23) and the lower rounded portion (22) of the flange of the rim, and the thickness (e) of which, which is constant radially over the height (H), is variable circumferentially between a maximum value ($e_M$) at the level of the maximum value ($F_M$) of the variation in radial force ($F_{Rn}$), and substantially proportional to the amplitude (A) of the variation ($F_{Rn}$) and a minimum value ($e_m$) of 0.3 mm at the level of the minimum value ($F_m$) of the variation ($F_{Rn}$), the value of the thickness (e) between these two extremes ($e_M$) and ($e_m$) for the point of the wedge (30) corresponding to the value (F) of the radial force measured, being such that the quantity (e-0.3) in mm is proportional to

the quantity $(F-F_m)$, the compensation wedge being made of a plastic or elastomeric, simple or composite material of a density of at most 1.2.

2. A method according to Claim 1, characterised in that the compensation wedge (30) has a thickness (e) which decreases from a maximum value $(e_M)$ at the level of the maximum value $(F_M)$ of the first harmonic $(F_{R1})$ of the variation in radial force $(F_R)$ to a minimum value $(e_m)$ of 0.3 mm at the level of the minimum value $(F_m)$, and increases from said minimum value to the maximum value $(e_M)$, the variation of (e) as a function of the circumferential position being a sine function.

3. A method according to one of Claims 1 and 2, characterised in that wedges (30) are used of a height (h) greater than the height (H) of the vertical wall (23) of the flange of the rim (20) and of quasi-trapezoidal cross-section, the bases of said section being parallel to the vertical wall (23), and the other two sides of said section forming an angle $(\alpha)$ of between 40° and 50° with said bases.

4. A method according to one of Claims 1 and 2, characterised in that compensation wedges (30) are used of a height (h) greater than the height (H) of the vertical wall (23) of the flange of the rim (20) and of parallelogram-shaped cross-section, the inner development of the wedge (30) being slightly less than the quantity $2\pi R_J$, $R_J$ being the nominal radius of the rim.

5. A method of correcting defects in uniformity of a tyre mounted on a rim, the seats of which form an angle of 15° ± 1° with the axis of rotation of the tyre, including measuring the amplitude and the circumferential positions of the optimums of the variation in radial force of the first harmonic by rolling on a uniformity machine, characterised in that, after measurements and demounting of the tyre, there is placed between the seats (21) of the rim (20) and the seats of beads (12) of the tyre (1), on each side of the tyre (1), a compensation wedge (30) in the form of a circular ring and having a cross-section in the shape of a parallelogram, the width $(l_c)$ of which is at least equal to 80% of the width (l) of the bead (12), the thickness (e) of which, measured perpendicular to the seats (21) of the rim (20), is constant over a cross-section but variable circumferentially between a value $(e_M)$ which is maximum at the level of the minimum value $(F_m)$ of the radial force $(F_{R1})$ and a minimum value $(e_m)$ of 0.3 mm at the level of the maximum value $(F_M)$, the value $(e_M)$ being proportional to the amplitude $(A_1)$ of the variation $(F_{R1})$, the value of the thickness (e) at a point of the wedge corresponding to the radial force (F) being such that (e - 0.3) mm is inversely proportional to $(F - F_m)$, the compensation wedge being made of a plastic or elastomeric, simple or composite material of a density of at most 1.2.

6. A method according to Claims 1 to 4, characterised in that the compensation wedges (30) are of plastic material and placed and maintained, either on the rim (20) or on the bead (12) of the tyre (1) by simple adhesion by means of adhesive paper.

7. A method according to Claims 1 to 4, characterised in that the compensation wedges (30) are of filled elastomeric material and are applied on the beads (12) of the tyre (1) by means of a connecting rubber and dissolution layers, the bead-wedge assembly undergoing localised partial vulcanisation by the application of heat.

FIG 1

FIG 2

FIG 3

FIG 4

FIG 5

FIG 6